# EUROPEAN PATENT APPLICATION

(11) **EP 2 717 114 A1**
(43) Date of publication of application: **09.04.2014**
(21) Application number: 12187036.4
(22) Date of filing: 02.10.2012
(51) Int. Cl.: G06F 1/16

(54) **Magnetic fastener apparatus and related methods**

(71) Applicant: BlackBerry Limited, Waterloo, ON N2K 0A7 (CA)
(72) Inventor: Corley, Kevin Joseph, Atlanta Georgia 30313 (US); Pegg, Albert Murray, Waterloo Ontario N2L 3W8 (CA)
(74) Representative: Hibbert, Juliet Jane Grace

(57) **Abstract**

Magnetic fastener apparatus and related methods are disclosed herein. An example electronic device includes a first housing coupled to a second housing to define a cavity. A latch is coupled to the first housing, and a frame defining an opening is coupled to the second housing. A biasing element is positioned in the opening of the frame and a fastener is at least partially disposed in the opening. The fastener moves between a locked position via the biasing element to engage the latch and an unlocked position via a magnetic field to cause the fastener to disengage the latch. The latch and the frame are positioned inside the cavity when the first housing is coupled to the second housing.

## Description

### FIELD OF DISCLOSURE

The present disclosure relates to fasteners, including but not limited to, fastener apparatus and related methods.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. With continued demand for decreased size of portable electronic devices, electronic devices continue to decrease in size. However, the size of the electronic device may be limited by the type of fasteners (e.g., mechanical fasteners) that may be employed to couple together a housing of the electronic device. Further, electronic devices employing fasteners provide undesired sight lines and/or are typically visible and may be aesthetically unappealing.

### BRIEF DESCRIPTION OF THE DRAWINGS

FIG. 1 is a block diagram of an example portable electronic device in accordance with the teachings of this disclosure.

FIG. 2 is an example portable electronic device that may implement the example block diagraph of FIG. 1.

FIG. 3 is front view of an example electronic device constructed in accordance with the teaching disclosed herein that may implement the example electronic devices of FIG. 1 and FIG. 2. The example electronic device of FIG. 3 illustrates an example fastener apparatus disclosed herein in a locked position.

FIG. 3A is a cross-sectional view of the example electronic device of FIG. 3 taken along line 3-3 of FIG. 3.

FIG. 4 is an enlarged view of a portion of the example electronic device of FIG. 3 and FIG. 3A.

FIG. 5 is an enlarged view of another portion of the example electronic device of FIG. 3 and FIG. 3A.

FIG. 6 is a plan view of the example electronic device as shown in FIGS.3A, 4 and 5 having the example fastener apparatus in an unlocked position.

FIG. 7 is an enlarged view of a portion of another example electronic device constructed in accordance with the teachings disclosed herein.

FIG. 8 is a plan view of another example electronic device constructed in accordance with the teachings disclosed herein.

FIG. 9 illustrates a portion of another example electronic device having another example fastener apparatus disclosed herein shown in a locked position.

FIG. 10 illustrates the example electronic device of FIG. 9 having the example fastener apparatus shown in an unlocked position.

FIG. 11 is a flowchart illustrating an example method of fastening a housing in accordance with the teaching disclosed herein.

### DETAILED DESCRIPTION

Known electronic devices typically employ fasteners or screws to couple a first housing portion and a second housing portion. However, known fasteners typically have a head or portion that is visibly exposed and/or accessible from an external surface of an electronic device. Such known fasteners are visually unappealing and/or may encourage undesired disassembly of the electronic component. Further, the head of the fastener is often recessed relative to the housing portions via a counterbore formed in the housing (e.g., via a secondary manufacturing operation), thereby increasing manufacturing costs. Additionally or alternatively, such known fasteners typically require the housing portions to have a minimum dimensional thickness, which can limit a dimensional envelope (e.g., a thickness or height) of the electronic device can be decreased or reduced.

Some known fasteners enable housing portions to couple via a snap-fit connection. Although the snap-fit fasteners or features (e.g., clips) provide a relatively strong coupling or connection, the snap-fit feature or fastener may become damaged when the housing portions are decoupled to rework electronic components positioned inside the housing. For example, with snap-fit connections, the housing portions are typically pried open, which can cause damage to one or more of the housing portions and/or the snap-fit fasteners. As a result, if the snap-fit feature or fastener becomes damaged, the housing portions may not be able to be recoupled after the components have been reworked. Further, in some instances, an adhesive is applied to the housing to prevent separation of the housing portions when snap-fit connection is employed. In some instances, the adhesive loses its tackiness once the housing portions are reattached after a rework has been completed.

Example fastener apparatus disclosed herein employ magnetically activated or actuated fasteners that facilitate assembly and/or disassembly of electronic devices or other devices that have components disposed between two or more housing portions or frames. In particular, the example fastener apparatus disclosed herein are positioned internally relative to external surfaces of a housing of the electronic device such that the fastener apparatus are completely or fully concealed in the electric device. More specifically, in some examples, the fastener apparatus are hidden such that no portion of the fastener apparatus is visible from an external surface of a housing of the electronic device. As a result, the example fastener apparatus disclosed herein provide greater aesthetical appeal and enable relatively smaller profiles and/or dimensional envelopes.

Further, the example fastener apparatus disclosed herein can be positioned between an unlocked position and a locked position. More specifically, in the locked position, the example fastener apparatus disclosed herein provide a relatively strong connection (e.g., at least as strong as a connection provided by a snap-fit fastener). However, unlike some known fasteners (e.g., snap-fit connectors), the example fastener apparatus disclosed herein can be positioned to an unlocked position to enable or facilitate disassembly or decoupling of housing portions. In particular, in the unlocked condition, the example fastener apparatus disclosed herein enable the housing portions to be decoupled without damage to the example fastener apparatus. For example, the example fastener apparatus disclosed herein eliminate the need to pry the housing portions open or at least greatly diminish the forces used to open housing portions.

Example fastener apparatus disclosed herein include a magnetically activated or actuated spring-loaded mechanism (e.g., a magnetically biased pin). More specifically, a magnetic force or magnetic field is applied to the fastener apparatus from an external surface of a housing of the electronic device to deactivate or move the fastener apparatus positioned inside the housing to the unlocked condition to enable the housing portions to be decoupled relative to each other. For example, a magnet or an electromagnetic tool may be positioned adjacent an external surface of the housing to move the fastener apparatus to an unlocked condition. When the magnetic force is removed, a biasing element urges or biases the fastener apparatus in a locked position.

Additionally or alternatively, the example fastener apparatus disclosed herein may limit or significantly reduce unauthorized tampering or disassembly of an electronic device. For example, in some examples, an example electronic device disclosed herein may generate a magnetic field itself to move the fastener between a locked position and an unlocked position. In such these examples, a user or mobile operator may input a code or a series of codes to cause the electronic device to generate a magnetic field (internally adjacent a fastener inside the housing) to open or decouple the housing portions.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

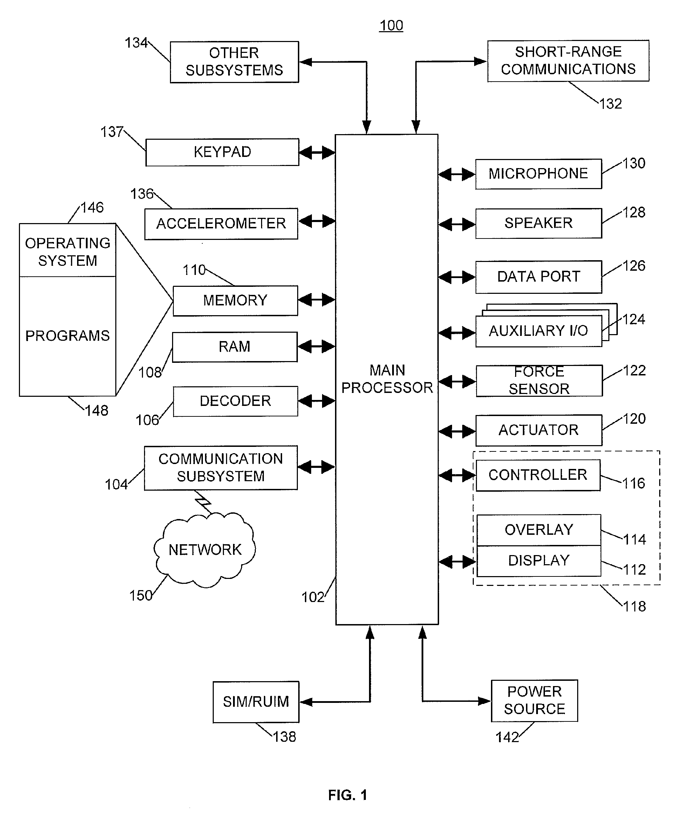

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134, a keypad 137 (e.g., a physical keypad, a virtual keypad), etc. The touch-sensitive display 118 includes a display 112 and touch sensors 114 that are coupled to at least one controller 116 that is utilized to interact with the processor 102. Input via a graphical user interface is provided via the touch-sensitive display 118 and/or the keypad 137. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors. The capacitive touch sensors may comprise any suitable material, such as indium tin oxide (ITO).

The methods described herein may be carried out by software executed, for example, by the processor 102. Coding of software for carrying out such a method is within the scope of a person of ordinary skill in the art given the present description. A computer-readable medium having computer-readable code may be executed by at least one processor of the portable electronic device 100 to perform the methods described herein.

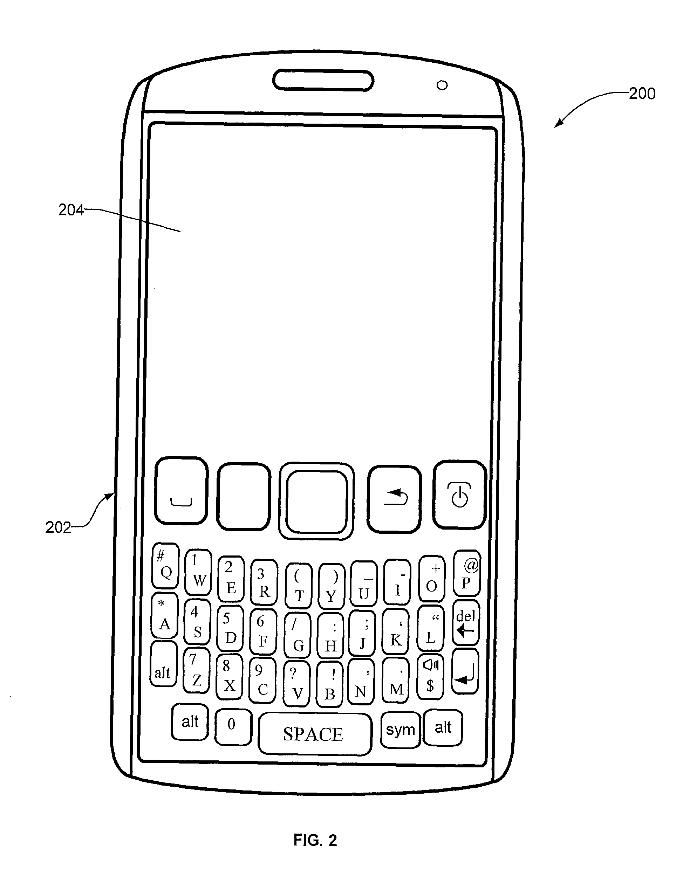

FIG. 2 is a front view of an example portable electronic device 200 that may implement the portable electronic device 100 of FIG. 1. In the example of FIG. 2, the portable electric device 200 is a handheld communication device or mobile phone. The electronic device 200 may be a data and/or voice-enabled handheld device that may be used to send and receive a message, a voice communication, a textual entry, etc. The portable electronic device 200 includes a housing 202 that can be held in one hand by a user of the portable electronic device 200 during data (e.g., text) and/or voice communications. In the example of FIG. 2, a user interacts with the electronic device 200 via a touch-sensitive display 204. Input detected by the touch-sensitive display 204 may result in execution of to choose commands, execution of application programs, performance of other functions, and selection of menu items or icons, scrolling and/or highlighting an icon or image.

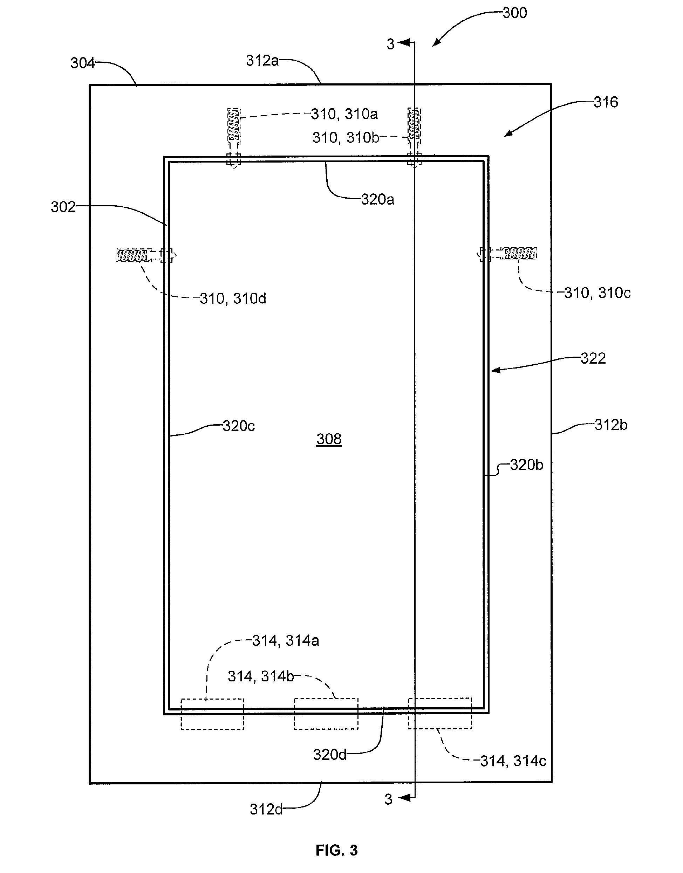

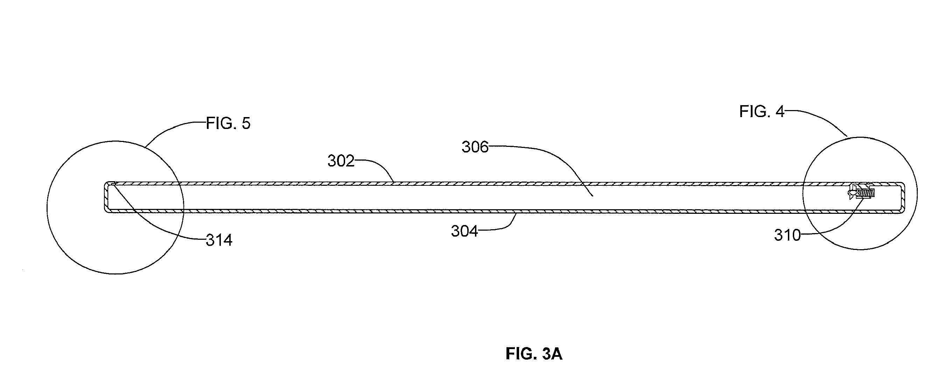

FIG. 3 illustrates a front view of an example housing 300 in accordance with the teachings disclosed herein. FIG. 3A is a cross-sectional view of the example housing 300 taken along line 3-3 of FIG. 3.

Referring to FIGS. 3 and 3A, the example housing 300 may be used to implement an example electronic device such as, for example the electronic devices 100 and 200 of FIG. 1 and FIG. 2, respectively. For instance, the housing 202 of FIG. 2 may be formed or implemented in accordance with the housing 300 to enclose the electronic or mobile components described above in connection with FIG. 1 and FIG. 2. For example, the housing 300 can enclose the microprocessor 102, the touch-sensitive display 118, the speaker 128, the microphone 130, etc. In other examples, the example housing 300 may implement other electronic devices and/or any other suitable device having a housing that includes a first portion or cover coupled to a second portion or cover such as, for example, a toy, a digital frame, a camera, a tablet, a computer, a telephone, a monitor, a remote control, a transmitter, etc.

Referring to FIGS. 3 and 3A, the housing 300 includes a cover or first housing portion 302 (e.g., a lid or cover) that couples to a frame or second housing portion 304 (e.g., a frame or base) to define a cavity 306 of the housing 300. For example, the cavity 306 may be configured to receive the electronic components of the electric device 100 or the electronic device 200. The first housing portion 302 may be a front or top cover and may include an opening or transparent area 308 to enable viewing and/or interaction with a display (e.g., the touch-sensitive display 118 or 204). In some examples, the first housing portion 302 may be a rear or bottom cover or door to enable access to, for example, a battery or SIM card reader of an electronic device and/or any other housing portion. For example, the first housing portion 302 may be a relatively small door or access panel (e.g., a SIM card tray /reader access panel, a battery door) that couples to a relatively larger housing (e.g., a side or rear surface of a housing).

To couple the first and second housing portions 302 and 304 and capture components in the cavity 306, the housing 300 of the illustrated example employs one or more fasteners 310. For example, the first housing portion 302 is removably coupled to the second housing portion 304 via the fasteners 310. Further, the fasteners 310 are positioned in an inner or interior surface of the housing 300 (e.g., positioned in the cavity 306). In this manner, the fasteners 310 are concealed or hidden (e.g., fully or completely concealed) relative to an exterior 312 or external surfaces 312a-d of the housing 300. In other words, as described in greater detail below, in some examples, the fasteners 310 are not directly accessible and/or visible from the external surfaces 312 of the housing 300.

In this example, the fasteners 310 are shown in a locked condition 316. However, in other examples, only one fastener 310 may be employed to secure or couple the first and second housing portions 302 and 304. In the example of FIGS. 3 and 3A, the fasteners 310 provide a redundant fastening or coupling of the first and second housing portions 302 and 304. Therefore, if one of the fasteners 310 releases or moves to an unlocked condition or position, then the other ones of the fasteners 310 retains the first and second housing portions 302 and 304 coupled together. In this manner, for example, if a force is applied to a portion of the housing 300 causing one of the fasteners 310 to release or become damaged (e.g., due to dropping the housing 300, etc.), the other ones of the fasteners 310 prevent release or decoupling of the first housing portion 302 and the second housing portion 304.

In the illustrated example, the housing 300 employs a set of fasteners 310a and 310b positioned along a first inner edge 320a of the housing 300, a fastener 310c positioned along a second inner edge 320b, and a fastener 310d positioned along a third inner edge 320c. The first, second and third inner edges 320a-c define a portion of an interface 322 (e.g., a seam) between the first and second housing portions 302 and 304. In this example, the fasteners 310a-b are positioned or oriented substantially perpendicular relative to fasteners 310c-d (e.g., the fasteners 310a and 310b are positioned at approximately ninety degrees from the fasteners 310c and 310d; and the fastener 310c is positioned at approximately 180 degrees relative to the fastener 310d). The fasteners 310a-b are positioned or oriented substantially parallel relative to each other. However, in other examples, the fasteners 310 may be oriented or positioned at any angle or orientation relative to each other and/or the housing 300.

To help align and/or retain the first and second housing portions 302 and 304, the housing 300 employs an alignment lip or tab 314. Further, the lip 314 of the illustrated example employs a plurality of lips or tabs 314a-c. However, in other examples, the housing 300 may only employ one lip (e.g., the lip 314b). In yet other examples, the housing 300 does not employ the lip 314 and the housing includes a substantially straight edge. As shown in FIGS. 3, the lips 314a-c are positioned along a fourth edge 320d of the housing 300 that also defines a portion of the interface 322 between the first and second housing portions 302 and 304. As a result, side or external surfaces or faces of the housing 300 may be formed without apertures or lines (e.g., a parting line) formed during manufacturing (e.g., molding) of the housing 300.

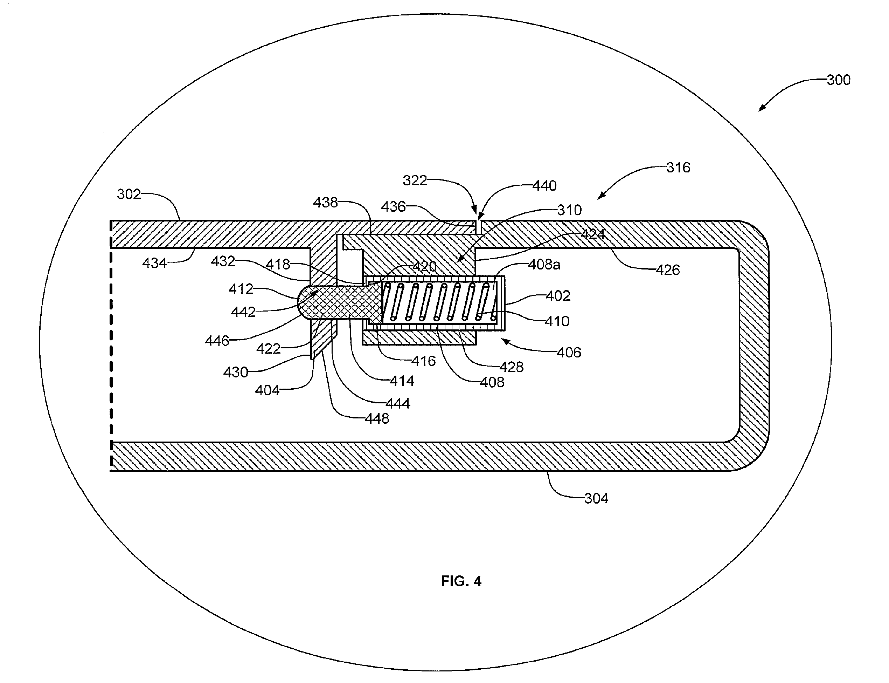

FIG. 4 is an enlarged view of the example fasteners 310 of FIG. 3 and FIG. 3A. Referring to FIG. 4, the fasteners 310 includes a first fastener portion 402 and a second fastener portion 404. The first fastener portion 402 interfaces and/or selectively cooperates with the second fastener portion 404 to couple or decouple the first and second housing portions 302 and 304.

The first fastener portion 402 is a spring loaded fastener 406 that includes a frame or cylinder 408, a biasing element or spring 410 and a movable member or pin 412 (e.g., a pogo pin, a magnetic pin, a metal pin, etc.) positioned in the cavity 408a. In one example, the frame 408 defines a cavity or opening 408a sized to receive the biasing element 410 and at least a portion of the pin 412. The pin 412 has a body portion 414 (e.g., a cylindrical body portion) and a flanged portion 416 to engage a shoulder or lip 418 of the frame 408. In other words, an inner surface 420 of the shoulder 418 is positioned or oriented toward the cavity 408a and engages the flanged portion 416 to provide a stop (e.g., a mechanical stop) to prevent the pin 412 from decoupling or detaching from the frame 408. As shown, the biasing element 410 biases or urges the flanged portion 416 of the pin 412 toward the shoulder 418 of the frame 408. The frame 408 and the pin 412 of the illustrated example employ a cylindrical shape or profile. However, in other examples, the frame 408, the pin 412 and/or a latch-engaging portion 422 of the pin 412 may employ a square or rectangular profile, a tapered or angled profile, and/or any other suitable shape or profile.

The first fastener portion 402 is coupled to a wall 424 of the second housing portion 304. The wall 424 of the illustrated example protrudes toward the cavity 306 and away from a surface 426 (e.g., an upper, inner surface) of the second housing portion 304. More specifically, the frame 408 is positioned in or coupled to an opening 428 of the wall 424 via, for example, adhesive, welding (e.g. plastic welding), a fastener, and/or any other fastening mechanism(s). In other examples, the frame 408 and/or the first fastener portion 402 may be integrally formed (e.g., via injection molding) with the wall 424 and/or the second housing portion 304 as a unitary piece or structure.

Further, the pin 412 and/or the latch-engaging portion 422 are composed of a magnetic or ferromagnetic material(s) (e.g., metal, iron, steel, etc.) and/or other suitable material(s) that may be influenced, attracted, pulled, pushed, repelled and/or otherwise manipulated by a magnetic force and/or a magnetic field. In some examples, the pin 412 and/or the latch-engaging portion may be a magnet having N or S polarity.

The second fastener portion 404 is a latch 430. The latch 430 includes a wall 432 that extends from an inner surface 434 of the first housing portion 302 toward the cavity 306. More specifically, the latch 430 is offset relative to an edge or end 436 of the first housing portion 302. Further, the edge 436 of the first housing portion 302 rests on or engages a portion or ledge 438 (e.g., a recessed edge or end) of the second housing portion 304 (e.g., the cylinder of the first fastener portion) such that a gap or seam 440 at the interface 322 between the first and second housing portions 302 and 304 is relatively small (e.g., minimized). Further, the ledge 438 of the second housing portion 304 provides support to the first housing portion 302 when the first and second housing portions 302 and 304 are coupled together.

The latch 430 (e.g., the wall) includes a pin-engagement feature 442 that is aligned and/or configured to receive at least the latch-engaging portion 422 of the pin 412. As shown, the pin-engagement feature 442 includes a slot or opening 444. However, in other examples, the pin-engagement feature 442 may include an aperture, a semi-circular opening, a hook and/or any other latching apparatus to receive the latch-engaging portion 422 and/or the pin 412. In some examples, the latch 430 employs a shape (e.g., a shaped opening) that is complementary to the latch-engaging portion 422 and/or the pin 412 to matably engage or receive the latch-engaging portion 422 and/or the pin 412.

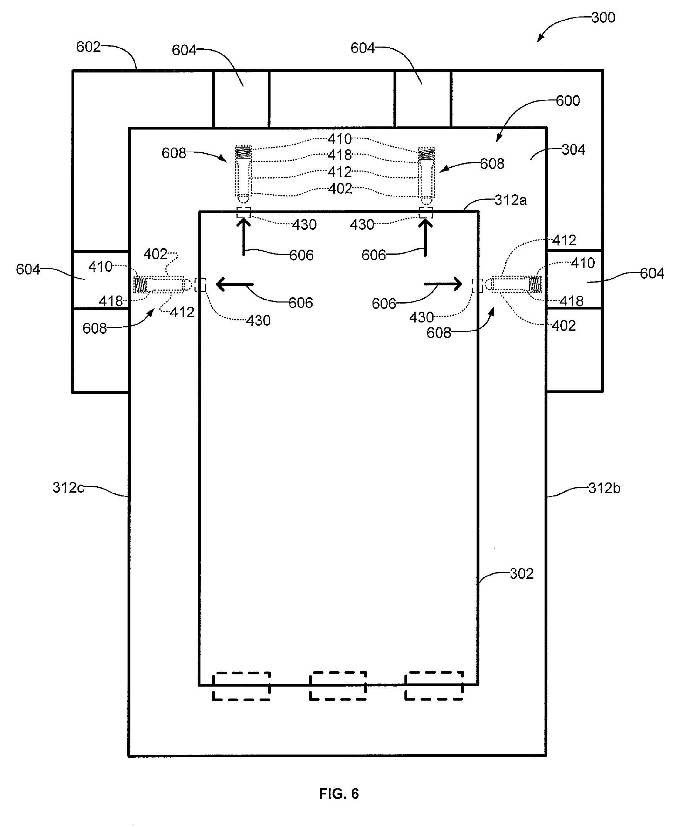

In this example, the latch-engaging portion 422 of the pin 412 includes a tapered or cylindrical profile 446 and the wall 432 includes a slanted, tapered or angled profile 448. In this manner, when the first housing portion 302 is being attached or coupled to the second housing portion 304, the wall 432 of the latch 430 engages the latch-engaging portion 442 of the pin 412 to cause the pin 412 to move or retract away from the pin-engaging feature 442 and against the biasing force of the biasing element 410. When the latch-engaging portion 422 is positioned relative to (e.g., aligned with) the pin-engaging portion 442, the pin 412 moves toward the latch 430 via the biasing element 410 (e.g., until the flange 416 of the pin 412 engages the shoulder 418) and the latch-engaging portion 422 engages the pin- engagement portion 442 to provide the locked condition 316. Thus, a tool is not required to couple the first housing portion 302 and the second housing portion 304. Alternatively, as described in greater detail below in connection with FIG. 6, a tool may be employed to couple or decouple the first and second housing portions 302 and 304.

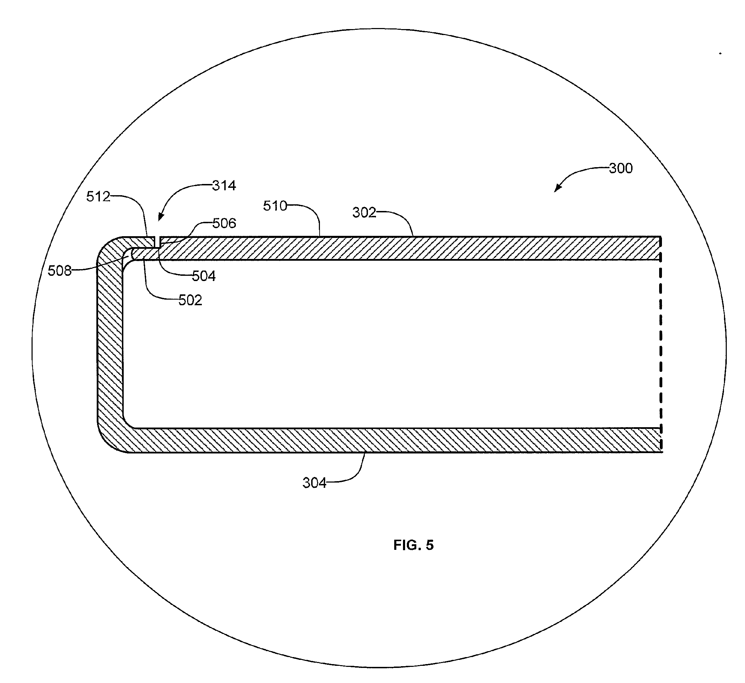

FIG. 5 is an enlarged view of the lip 314 of FIG. 3. Referring to FIG. 5, the lip 314 of the housing 300 is defined by a protruding portion or tab 502 formed on the first housing portion 302. More specifically, the tab 502 is provided via a recess 504 formed or positioned at an end 506 of the first housing portion 302. As shown in FIG. 5, for example, the end 506 of the first housing portion 302 has an L-shaped profile. When coupled to the second housing portion 304, the tab 502 is positioned in a cavity or well 508 of the second housing portion 304 positioned adjacent the edge 320d. To insert the tab 502 in the well 508, the end 506 of the first housing portion 302 may be inserted at an angle relative to the second housing portion 304 to position the tab 502 into the well 508 (e.g., with the end 436 at a relatively higher elevation relative to the end 506). Once the tab 502 is provided in the well 508, the end 436 (FIG. 4) is positioned or lowered onto the second housing portion 304, where the pin 412 engages the latch 430 to lock or couple the first and second housing portions 302 and 304. As shown in FIG. 5 (and FIG. 3A), an outer surface 510 (e.g., a top surface or a bottom surface) of first housing portion 302 is relatively flush (e.g., flush mounted) relative to an outer surface 512 (e.g., a top surface or bottom surface) of the second housing portion 304.

FIG. 6 illustrates the example housing 300 in an unlocked condition or position 600. With the fasteners 310 in the unlocked condition 600 as shown in FIG. 6, the first housing portion 302 may be decoupled and/or removed from the second housing portion 304. More specifically, the fasteners 310 move to the unlocked position 600 when a magnetic force or magnetic field is applied to the fasteners 310. As noted above, in some examples, the fasteners 310 are not accessible externally relative to the housing 300.

To move the fasteners 310 to the unlocked position 600, a tool or carrier 602 is positioned adjacent the respective outer surfaces 312a-c of the housing 300 with which the respective fasteners 310a-d are positioned or aligned. For example, as shown in the illustrated example, the tool 602 has a U-shaped profile or shape and receives at least portion of the outer surfaces 312a-c of the housing 300. At least a portion of the tool 602 includes magnetized material(s). For example, the magnetized material(s) may be composed of ferromagnetic materials, may be coils energized by a voltage source to provide electro magnets, and/or any other material(s) and/or mechanism(s) to provide a magnetic field.

For example, in the illustrated example, the tool 602 supports one or more magnetic members 604 (e.g., magnets) to provide a magnetic force or a magnetic field to the pins 412. In turn, the magnetic force or the magnetic field causes the pins 412 to move in the direction of the arrows 606 away from the respective latches 430. As noted above, the pins 412 are composed of a metallic material or a ferromagnetic material and are, thus, moved under an influence of a magnetic force or a magnetic field. As shown, the pins 412 move against the biasing force of the respective biasing elements 410 to a retracted position 608 under the influence of a magnetic force or a magnetic field provided by the respective magnetic members 604. As shown in FIG. 6, in the retracted position 608, the flanged portion 416 of the pins 412 moves away from the shoulder 418 of the frame 408 in a direction away from the respective latches 430. As a result, the latch-engaging portion 422 of each of the pins 412 disengages or decouples from their respective latches 430 to enable the first housing portion 302 to be removed relative to the second housing portion 304. The tool, for example, employs a plurality of magnets having a common polarity (e.g., north polarity) to attract the pins 412 in the direction of the arrows 606 shown in FIG. 6. In other examples, the tool 602 may provide an electromagnetic field to move the fasteners 310 to the unlocked position 600. For example, an electromagnetic field may be activated by providing a voltage to the tool.

Alternatively, as noted above, the tool 602 may be employed to couple the housing portions 302 and 304. For example, the tool 602 may be employed to move the pins 412 to the retracted position 608 and the first housing portion 302 may be positioned on or relative to the second housing portion 304 such that the latch 430 substantially aligns with the pin 412. The tool 602 and/or the magnetic force or field may then be removed so that the biasing element 410 moves the pins 412 into engagement with the respective latches 430.

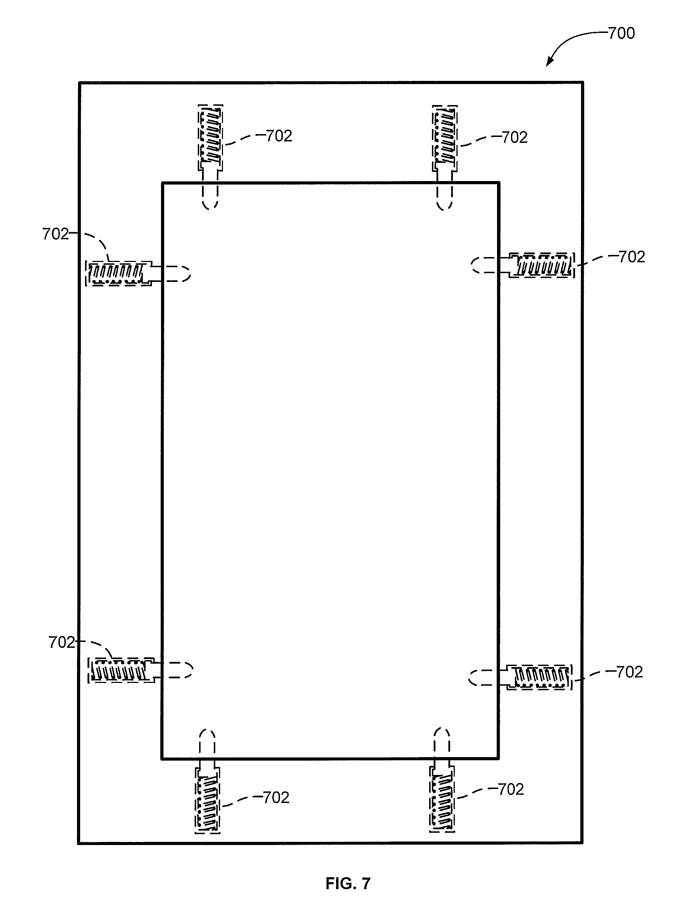

FIG. 7 illustrates another example housing 700 constructed in accordance with the teachings disclosed herein. Referring to FIG. 7, the housing 700 of the illustrated example employs a plurality of fasteners 702 instead of the lip 314 of the example housing 300 of FIGS. 3, 3A and 4-6.

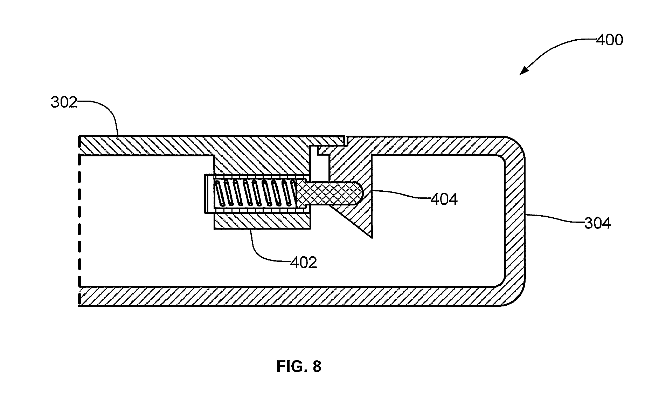

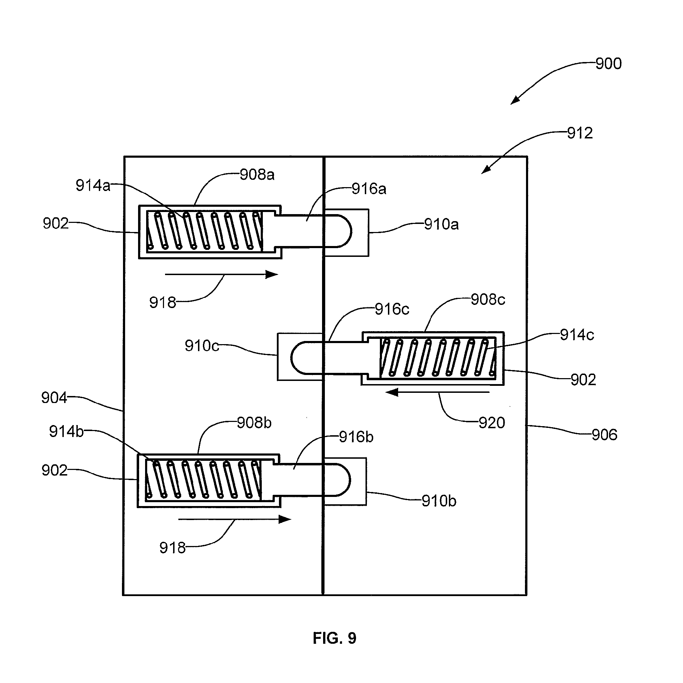

FIG. 8 illustrates another example housing 800 disclosed herein. The example housing 800 illustrates that the fastener portions 402 and 404 may be reversed relative to the housing portions 302 and 304. For example, as shown in FIG. 8, a housing 400 disclosed herein may have the first fastener portion 402 coupled to the first housing portion 302 and the second fastener portion 404 coupled the second housing portion 304. In some examples, as described for example in FIG. 9, the fasteners portions 402 and 404 may be coupled in an alternating pattern relative to the housing 300.

FIG. 9 illustrates a portion of another example housing apparatus 900 constructed in accordance with the teachings disclosed herein. As shown in FIG. 9, a plurality of fasteners 902 may be coupled to the example housing 900 in an alternating pattern relative to a first housing portion 904 (e.g., the first housing portion 302) and a second housing portion 906 (e.g., the second housing portion 304). In other words, as shown in FIG. 9, first fastener portions 908a-b (e.g., the movable fastener portion 402) are coupled to the first housing portion 904 and a first fastener portion 908c is coupled to the second housing portion 906. Likewise, second fastener portions 910a-b (e.g., the latch 404) are coupled to the second housing portion 906 and aligned with the respective first fastener portions 908a-b and a second fastener portion 910c is coupled to the first housing portion 904 and aligned with the first fastener portion 908c of the second housing portion 906. As shown in FIG. 9, the fasteners 902 are in a locked condition 912 to couple the housing portions 904 and 906 together. More specifically, biasing elements 914a-b of the first fastener portions 908a-b bias or urge respective pins 916a-b toward the respective second fastening portions 910a-b in a first direction indicated by arrows 918 and a biasing element 914c of the first fastener portion 908c biases a pin 916c toward the second fastener portion 910c in a second direction indicated by arrow 920, which is opposite the first direction of arrows 918.

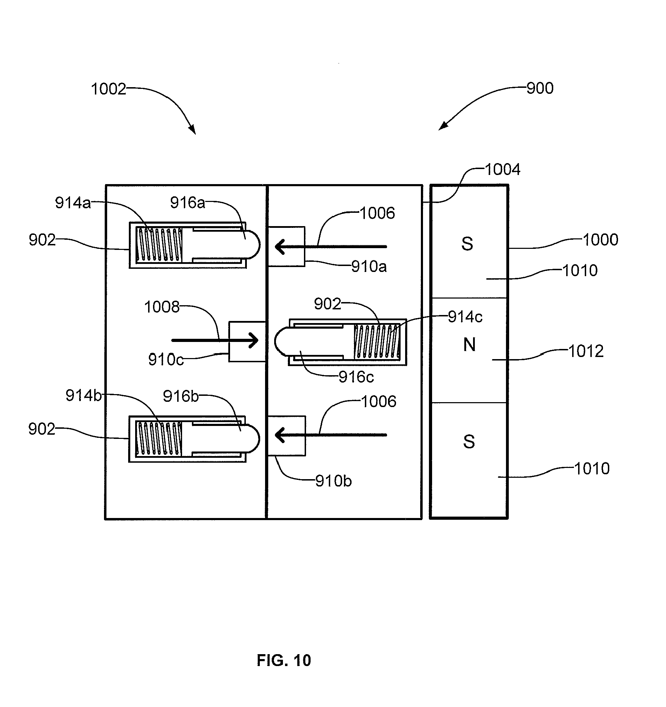

FIG. 10 illustrates the example housing portion 900 of FIG. 9 positioned adjacent a tool 1000. The tool 1000 is employed to move the plurality of fasteners 902 to an unlocked condition or position 1002. In the unlocked condition 1002, the first housing portion 904 may be decoupled from the second housing portion 906.

To move the fasteners 902 to the unlocked condition 1002, the tool 1000 applies a magnetic force or a magnetic field. More specifically, the tool 1000 is positioned adjacent an outside or external surface 1004 of the housing 900 and applies a magnetic field or a magnetic force to move the fasteners 902 to the unlocked condition 1002. Unlike the tool 702 of FIG.7, the tool 1000 of FIG. 10 applies magnetic forces or magnetic fields in different or opposite directions of arrows 1006 and 1008. For example, the different directional magnetic fields may be provided substantially simultaneously. For example, the tool 1000 of the illustrated example employs magnetic members 1010 and 1012 (e.g., magnets) having different polarities to provide magnetic forces in the different directions illustrated by arrows 1006 and 1008. For example, the tool 1000 provides a first magnet 1012 having a north polarity to pull the pin 916c of the first fastener portion 908c away from the second fastener portion 910c in the direction of arrow 1008 to the unlocked condition 1002. The tool 1000 also includes second magnets 1010 each having a south polarity to push the respective pins 916a-b away from the respective second fastener portions 910a-b in the direction of arrows 1006 to the unlocked position 1002.

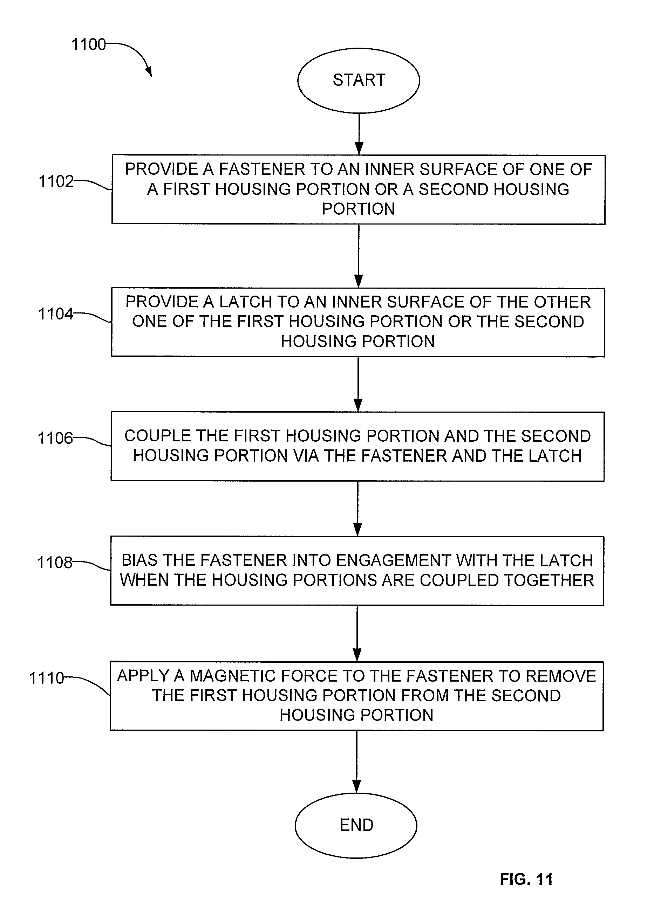

FIG. 11 is a flowchart of an example method 1100 that may be used to assemble example housing apparatus such as, for example, the example housing apparatus 300, 800 and 900 disclosed herein. While an example manner of assembling the example housing is disclosed herein, one or more of the blocks and/or processes illustrated in FIG. 11 may be combined, divided, re-arranged, omitted, eliminated and/or implemented in any other way. Further still, the example method of FIG. 11 may include one or more processes and/or blocks in addition to, or instead of, those illustrated in FIG. 11, and/or may include more than one of any or all of the illustrated processes and/or blocks. Further, although the example method 1100 is described with reference to the flow chart illustrated in FIG. 11, many other methods of manufacturing a covering assembly may alternatively be used.

To begin the example assembly process of FIG. 11, a housing (e.g., the housing portions 302 and 304) is formed or provided (not shown). For example, the housing may be composed of plastic and may be formed via injection molding.

A fastener (e.g., the first fastener portion 402) is provided to one of the first housing portion or the second housing portion (block 1102). For example, the fastener may include a cylindrical body (e.g., the frame 408) integrally formed with the first housing portion or the second housing portion. The fastener may include a movable member or pin (e.g., the pin 412) that includes a magnetic material(s).

A second fastener portion or latch (e.g., the second fastener portion 404) is provided to the other one of the first housing portion or the second housing portion (block 1104). For example, the latch may be integrally formed with the other one of the first or second housing portions and may include an opening, slot, cavity, partial opening and/or an aperture to receive at least a portion of the pin to provide a locked condition. The fastener and the latch are positioned inside the housing portions so that the fastener and the latch are concealed relative to an outer surface of the first and second housing portions. At block 1106, the first housing portion and second housing portions are coupled together via the fastener and the latch.

A biasing element biases the fastener into engagement with the latch when the housing portions are coupled together (block 1108). More specifically, the fastener is biased into locking engagement with the latch to prevent decoupling of the first and second housing portions when the first housing portion is coupled to the second housing portion. The biasing element may be disposed in a cavity of the cylinder body of the first fastener to bias pin toward the latch.

A magnetic force is employed to decouple the first and second housing portions. (block 1110). For example, a tool or a magnet may be employed to provide a magnetic field or a magnetic force adjacent an outer surface of the housing portions to cause the fastener to move to an unlatched position to disengage the latch to enable decoupling of the first and second housing portions.

In some examples, the magnetic field may be employed to move the pin of the fastener to a retracted position (e.g. the position 608) and the first housing portion is coupled to a second housing portion. The magnetic field is removed and the biasing element biases the pin toward the latch to the locked condition or position.

The example magnetically activated fasteners disclosed herein are positioned internally relative to external surfaces of a housing of the electronic device and are completely or fully concealed and non-visible from an external surface of the electric device. As a result, the example fasteners disclosed herein provide greater aesthetical appeal and enable the electronic devices to employ relatively smaller profiles and/or dimensional envelopes.

Example fasteners disclosed herein employ magnetically activated fasteners to facilitate assembly and/or disassembly of electronic devices or other devices that have components disposed between two or more housing portions or frames. In particular, the example fasteners disclosed herein provide a relative strong connection when the fasteners are in the lock position (e.g., at least greater than a connection provided by a snap-fit fastener or connection), and can move to an unlocked condition to enable the housing portions to be decoupled without damage to the fasteners during disassembly of the housing portions. Further, the example fasteners disclosed herein are positioned internally relative to external surfaces of a housing of the electronic device such that the fasteners are completely or fully concealed in the electric device so that no portion of the fasteners is visible from an external surface of a housing of the electronic device. As a result, the example fasteners disclosed herein provide greater aesthetical appeal and enable relatively smaller profiles and/or dimensional envelopes. Additionally or alternatively, because a magnetic force or magnetic field is needed to deactivate or move the fasteners positioned inside the housing to an unlocked condition, the example fasteners may limit or significantly reduce unauthorized tampering or disassembly of an electronic device.

The present disclosure may be embodied in other specific forms without departing from the teachings or essential characteristics of this disclosure. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A housing comprising:
a first housing coupled to a second housing to define a cavity;
a latch to be coupled to the first housing;
a frame defining an opening, the frame to be coupled to the second housing;
a biasing element positioned in the opening of the frame; and
a fastener at least partially disposed in the opening, the fastener movable between a locked position via the biasing element to engage the latch and an unlocked position via a magnetic field to cause the fastener to disengage the latch, wherein the latch and the frame are positioned inside the cavity when the first housing is coupled to the second housing.

2. The housing of claim 1, wherein the frame is substantially aligned relative to the latch.

3. The housing of claim 1, wherein the fastener comprises a pin at least partially composed of a ferromagnetic material,
and/or,
wherein the pin comprises a flange to engage a shoulder of the frame.

4. The housing of claim 1, wherein at least a portion of the fastener is composed of metal.

5. The housing of claim 1, wherein the fastener moves to the unlocked position against a force of the biasing element when the magnetic field is provided to the fastener.

6. The housing of claim 1, wherein the magnetic field is provided adjacent an external surface of the housing to move the fastener to the unlocked position.

7. A housing comprising:
a first housing;
a second housing coupled to the first housing to define a cavity; and
a fastener positioned inside the cavity to removably couple the first housing and the second housing, the fastener including:
a first fastener portion coupled to the first housing, the first fastener portion having a movable latch-engaging portion; and
a second fastener portion coupled to the second housing, the second fastener portion having a latch, the movable latch-engaging portion to move to a first position via a biasing element to engage the latch to couple the first housing and the second housing, and the movable latch-engaging portion to move to a second position via a magnetic field to release the latch to decouple the first housing and the second housing.

8. The housing of claim 7, wherein the fastener is concealed from an external surface of the first housing and the second housing when the first housing is coupled to the second housing.

9. The housing of claim 7, wherein the magnetic field is to be provided adjacent an external surface of the first housing portion or the second housing portion.

10. The housing of claim 7, wherein at least a portion of the first fastener portion or the latch-engaging portion is composed of a ferromagnetic material.

11. The housing of claim 7, further comprising a plurality of fasteners having a plurality of the first fastener portions and a plurality of the second fastener portions.

12. The housing of claim 11, wherein the plurality of the first fastener portions are positioned on the first housing and the plurality of the second fastener portions are positioned on the second housing and substantially aligned with the first plurality of housing portions,
or alternatively,
wherein a first plurality of the first fastener portions are positioned on the first housing and a first plurality of the second fastener portions are positioned on the second housing and substantially aligned with the first plurality of the first fastener portions, and wherein a second plurality of the first fastener portions are positioned on the second housing and a second plurality of the second fastener portions are positioned on the first housing and substantially aligned with the second plurality of fastener portions,
and/or,
wherein a first magnetic field provided in a first direction decouples the first plurality of first fastener portions and the first plurality of the second fastener portions, and a second magnetic field provided in a second direction opposite the first direction decouples the second plurality of the second fastener portions and the second plurality of the first fastener portions.

13. A method for assembling a device, the method comprising:
providing a fastener to an inner surface of one of a first housing portion or a second housing portion;
providing a latch to an inner surface of the other one of the first housing portion or the second housing portion; and
coupling the first housing portion and the second housing portion via a fastener and the latch positioned inside of the first housing portion and the second housing portion, the fastener and the latch being concealed relative to an outer surface of the first and second housing portions.

14. The method of claim 13, further comprising providing a magnetic field adjacent the outer surface of the housing portions to cause the fastener to move to an unlatched position to disengage the latch to enable decoupling of the first and second housing portions,
and/or
further comprising removing the magnetic field to cause the fastener to engage the latch and prevent the first housing portion from decoupling relative to the second housing portion,
and/or,
further comprising biasing the fastener toward the latch via a biasing element to prevent decoupling of the first and second housing portions when the first housing portion is coupled to the second housing portion.

15. The method of claim 13, further comprising positioning a tool having a magnetized ferromagnetic material adjacent the fastener to move the fastener to an unlocked position to enable decoupling of the first and second housing portions.
